# EUROPEAN PATENT APPLICATION

(11) **EP 3 300 047 A1**
(43) Date of publication of application: **28.03.2018**
(21) Application number: 16290183.9
(22) Date of filing: 26.09.2016
(51) Int. Cl.: G08G 1/08, G08G 1/0967

(54) **DYNAMIC TRAFFIC GUIDE BASED ON V2V SENSOR SHARING METHOD**

(71) Applicant: ALCATEL LUCENT, 92100 Boulogne-Billancourt (FR)
(72) Inventor: Roessler, Horst, 70435 Stuttgart (DE); Alam, Md Ashraful, 70435 Stuttgart (DE); Derakhshan, Fariborz, 70435 Stuttgart (DE); Schefczik, Peter, 70435 Stuttgart (DE)
(74) Representative: Richardt Patentanwälte PartG mbB

(57) **Abstract**

The present disclosure relates to a method for controlling a first device (101A). The method comprises: collecting a first set of data using a first type of sensors of the first device (101A). A second set of data of a second type of sensors may be received from at least another second device (101B-107) over a communication channel. The first and second sets of data may be combined for determining a current vehicle traffic configuration. The first device (101A) may be controlled in accordance with the current vehicle traffic configuration.

## Description

### Technical Field

The disclosure relates to monitoring and/or controlling components, systems or subsystems of a vehicle traffic component, and more particularly to a dynamic traffic guide based on vehicle to vehicle (V2V) sensor sharing method.

### Background

Vehicle traffic is typically irregular and traffic events or incidents can be unforeseeable. Thus there is an increased need for response strategies to ensure safe and efficient use of road networks.

### Summary

Various embodiments provide a method for controlling a first device, vehicle traffic management system and a non-transitory computer readable storage medium as described by the subject matter of the independent claims. Advantageous embodiments are described in the dependent claims.

In some embodiments, a method for controlling a first device is disclosed. The method comprises: collecting a first set of data using a first type of sensors of the first device; receiving a second set of data of a second type of sensors of at least an-other second device; combining the first and second sets of data for determining a current vehicle traffic configuration; enabling controlling at least the first device in accordance with (or by means of) the current vehicle traffic configuration. For example, the second set of data may be received from each of the at least one second device via a respective communication channel.

The enabling of controlling at least the first device in accordance with the current vehicle traffic configuration comprises controlling (e.g. automatically controlling) the first device in accordance with the current vehicle traffic configuration. Alternatively or in addition, the enabling of controlling of the first device comprising displaying the current vehicle traffic configuration in association with controlling options or recommendations or warning for enabling (e.g. a user of the first device) controlling the first device. In response to the displaying the first device may be controlled e.g. in accordance with the controlling options. In other terms, the present method may enable an automatic control and/or user control of the first device by means of the current vehicle traffic configuration. For example, a first part of the control of the first device may automatically be performed and a remaining part of the control of the first device may be performed by the user e.g. by enabling the user with the current traffic configuration in order to further control the first device. For example, the user may be prompted to perform one or more actions in order to control the first device.

The current vehicle traffic configuration may be determined for a predefined monitoring area in which the first device can receive data from other devices. In one example, the monitoring area may be an area surrounding the first device. For example, the monitoring area may be a circle having a predefined radius (e.g. of 10 m or 2 km) over which the first device can receive data from other devices in accordance with the present method, wherein the first device is in the center of the circle.

For example, the current traffic configuration may be determined using predefined maps of the monitoring areas. A map may be a representation of the monitoring area that indicates roads, buildings or other things that are present in the monitoring area. For example, the configuration may be provided by modifying the predefined map to indicate (e.g. the position, speed of etc.) the first device and second devices on the predefined map.

The present method may be advantageous as there may be no need for the deployment of additional sensors, e.g. video cameras, etc. due to the already existent pervasiveness of vehicles. Since vehicles can publish their sensor data towards other devices, the publication of sensor data to surrounding vehicles may enable additional traffic services. Due to the different sensor equipment on different vehicles sharing of real-time sensor data to surrounding vehicles may depict a potential advantage.

Another advantage of the present method may be to enhance the capabilities of users by exploiting their already available instruments without the need for any additional equipment. Without roundtrip time that may be caused by an indirect communication the present method can quickly issue recommendations for the drivers in the receiving car (the first device) which does not have the required sensors by using information from the sending car (second device) that has the corresponding sensors. Ditto for pedestrians, bikers, etc. in receive mode.

For example, a device of the first and second devices may comprise a vehicle or a lighting device.

In one example, the first device may receive and/or send data only to predefined second devices. For example, the first device and the predefined second devices may belong to a predefined group or community. That group or community may be associated with a central unit such that each of the first dn predefined second devices may be registered with the central such that they can become member of the group. For example, upon registering in the group a device may provide information indicating its types of sensors and their parameters. This information may be sent to the other devices of the group. Based on that information, the first device may accept or reject second set of data based on the sender of the second set of data e.g. if the sender has similar types of sensors as the first device, the received second set of data may be rejected (e.g. not processed); however, if the sender has different types of sensors, the received second set of data may be accepted and processed according to the present method.

The controlling of the first device may comprise controlling the first device to perform an action (such as turning, accelerating, decelerating, overtaking a car, providing a warning notification or switching the lighting mode etc.) that would enable the first device to be in a desired or predefined situation that allows the first device to reach a predefined target (e.g. within a predefined time period) and/or to avoid an event such as a congestion or accident. The predefined situation may indicate for example a minimal distance of the first device to other neighboring devices to avoid collisions, or possible positions of the first device within the roads of the monitoring area, or a speed of the first device that would enable the first device to reach the target in a predefined time (e.g. in order to increase the speed the first device may be controlled to overtake a car) etc.

In one example, the controlling of the first device may further comprise identifying other vehicles in the vehicle traffic to which the first device adheres, wherein the controlling of the first device may comprise generating instructions indicating the steps to be performed by each of the first device and other devices in that traffic area and sending the respective instructions to the other devices. For example, the first and other devices may be controlled to execute the instructions at the same time. For example, a given vehicle in the traffic area may be controlled to decelerate if the first device is controlled to overtake that given vehicle.

The vehicle which receives real-time sensor data from the surrounding vehicles can be registered in the same network formed by the surrounding vehicles and the vehicle which receives the real time sensor data. The network may for example be a network that enables or that permits direct, point-to-point communication (voice or data) between vehicles or devices. For example, the network may be a vehicular ad hoc network. The aggregation of the sensor data from surrounding traffic participants may lead to the union of all sensor types available in the traffic scene. The published real time sensor data together with the private sensor data and user preferences can feed a dynamic application which handles the local traffic scene. This application tracks the current traffic and road conditions and can provide useful recommendations and guidance for the traffic participants.

The present method may further have the following advantages. It may provide an uninterrupted service even in case of outage of mobile network (can happen for fault of network operator or the area is simply out of coverage). It may be possible to extend the network coverage by sensor sharing. It may protect the cloud network from flooding with unnecessary data or save the cloud network resources (for example, if a driver needs the camera data from a neighbour, it may prevent to first send it to a third party and then send it to the driver).

According to one embodiment, the first device is a vehicle, wherein enabling controlling the first device using the current vehicle traffic configuration for automatically controlling the first device (e.g. enabling the first device for automatically controlling the first device in response to determining the current vehicle traffic configuration) using directions wherein the directions include a speed, a lane, a movement direction and a position within the vehicle traffic to which the first device adheres. This embodiment may provide a controlled traffic of vehicles by automatically providing instructions or directions to devices that adhere to the vehicle traffic. The directions may be determined using the current vehicle traffic configuration.

According to one embodiment, the first device is a traffic light, wherein enabling controlling of the first device comprises using the current traffic configuration for controlling the first device by automatically (e.g. enabling the first device, in response to determining the vehicle traffic configuration, for automatically) switching the traffic light into a lighting mode that meets to the current vehicle traffic configuration. The traffic light or lightning device may be dynamically configured based on the traffic situation. This may prevent traffic congestions that may happen when using a traffic light that is controlled in a static manner. For example, the traffic light may be switched to a passive mode when traffic is not congested. In that passive mode, traffic light may switch off or flash yellow.

According to one embodiment, the method further comprises: in response to determining that the second type of sensors is unavailable for the first device, switching the first device to a receiving mode for the receiving of the second set of data. The switching may be performed from a given mode of operation of the first device that is different from the receiving mode. The given mode may for example the default mode of operation of the first device e.g. where reception of sensor data may not be performed. This may save processing resources in the first device by avoiding or preventing unconditional reception of data from other devices. For example, the first device may reject every received sensor data of sensors whose types is also available in the first device and may only filter data of the second type of sensors.

According to one embodiment, the determining that the second type of sensors is unavailable for the first device comprises determining that the sensitivity of the second type sensor of the first device is below a predefined threshold in at least part of a monitoring area, wherein the current vehicle traffic configuration is determined for the monitoring area. This may provide an accurate method for switching to the receiving mode, and may thus further save the processing resources that may otherwise be required by unnecessary switching to the receiving mode based on inaccurate method. The term "sensitivity" refers to the lowest value a sensor is capable of detecting or to the ability of the sensor to detect a desired parameter value in the range of interest e.g. in the monitoring area.

According to one embodiment, the determining of the current vehicle traffic configuration comprises selecting among predefined alternative vehicle traffic configurations the current vehicle traffic configuration using the first and second sets of data. The alternative vehicle traffic configurations may be provided or stored in association with predefined parameter values such as positions, speed etc. For example the positions, speed and other parameters values of the first and second set of data may be used to determine which the traffic configuration that matches those parameter values.

According to one embodiment, the enabling of controlling of the first device is performed in response to a successful negotiation of the current vehicle traffic configuration between the first device and a neighboring device of the first device. For example, the first device may request a confirmation of current vehicle traffic configuration by the neighboring device. This may provide a secure method for controlling the first device in dependence of other devices.

According to one embodiment, the method further comprises broadcasting by the first device a recognition signal for discovering a third device, and in response receiving a response from the third device, the response indicating that the third device has none of the first or second type of sensors.

According to one embodiment, the method further comprises notifying a third device having no first or second type of the sensors regarding the current vehicle traffic configuration. This may save processing resources in the third devices as they may not have to repeat the above method for determining the current traffic configuration. In another example, the first device may broadcast the current traffic configuration to all devices that it can with communicate. These embodiments may have the advantage of controlling the traffic of the vehicles in a cooperative and coherent manner, which may avoid for example that each device uses its own traffic configuration.

According to one embodiment, the communication channel is a vehicle-to-vehicle channel between the two devices being vehicles. In one example, the first and second devices communicate using direct communication. The first and second devices may communicate via a direct radio link without passing through a third party such as a network element of the network.

According to one embodiment, the current vehicle traffic configuration is a vehicle traffic configuration of a traffic surrounding the first device.

In some embodiments, a non-transitory computer readable storage medium is disclosed. The non-transitory computer readable storage medium comprises instructions that, when executed by a processing device, cause the processing device to effect the method of any one of the preceding method embodiments.

In some embodiments, a vehicle traffic management system is disclosed. The vehicle traffic management system is configured for: collecting a first set of data using a first type of sensors of a first device; receiving a second set of data of a second type of sensors of at least another second device over a communication channel; combining the first and second sets of data for determining a current vehicle traffic configuration; controlling at least the first device in accordance with the current vehicle traffic configuration. The vehicle traffic management system may be comprised in the first device.

In some embodiments, a sending system is configured for sending sets of data of a type of sensors over a communication channel to a second system. The second system may for example comprise the vehicle traffic management system.

In one example, the vehicle traffic management system may be configured to send the first set of data to a second device e.g. in a sending mode of operation. In other words, the vehicle traffic management system may be configured to perform as the sending system. The vehicle traffic management system may be configured to switch between the sending mode and the receiving mode e.g. in a predefined manner. For example, if the vehicle traffic management system does not require any control of the first device it may be switched into the sending mode in order to send data. In another example, the vehicle traffic management system may be switched to the sending mode upon receiving a request for data from the second device. The sending of the data may for example be performed by executing a corresponding thread on the sending device. For example, depending on the sending method, a corresponding thread may be executed. A real time sending thread may be executed for the sending of real time sensor data. A periodic sending thread may be executed for the sending of periodically collected sensor data. An event sending thread may be executed for the sending of event based collected sensor data. An on demand sending thread may be executed for the sending of on-demand sensor data.

### Brief description of the drawings

In the following embodiments of the invention are explained in greater detail, by way of example only, making reference to the drawings in which:
Figure 1 is a schematic diagram of an illustrative example of a vehicle traffic configuration,
Figure 2 represents a computerized system, suited for implementing one or more method steps as involved in the present disclosure, and
Figure 3 is a flowchart of a method for controlling a first device in a traffic monitoring area.
Figure 4 is a flowchart of another method for controlling a receiving device.

### Detailed description

In the following, like numbered elements in these figures are either similar elements or perform an equivalent function. Elements which have been discussed previously will not necessarily be discussed in later figures if the function is equivalent.

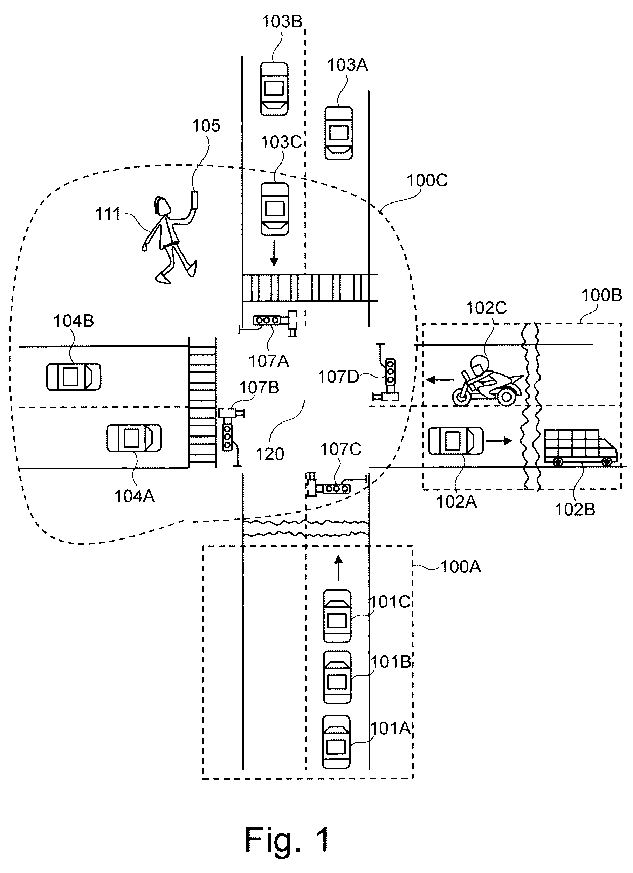

**Figure 1** is a schematic diagram of an illustrative example of a vehicle traffic configuration (also referred to as traffic configuration) in one or more monitoring areas 100A-C in accordance with an example of the present method. In this example, the present method is used to indicate the current traffic configuration to devices 101A-C (collectively referred to as 101), 102A-C (collectively referred to as 102), 103A-C (collectively referred to as 103), 104A-B (collectively referred to as 104), 105 and 107A-D (collectively referred to as 107).

A device 101-104 may comprise a vehicle such as a car or a bike. Device 105 may comprise a mobile device 105 e.g. that is carried by a pedestrian. The mobile device 105 may comprise a, smartphone, PDA, a laptop and the like. Device 107 may be a lighting device controlling entry into the control zone 120 which may a road intersection. In this example, the road intersection is shown with four corners each having a respective lighting device 107A-D.

Each of the devices 101-107 may be equipped with or may comprise sensors for detecting events or changes in their environment and provide a corresponding output. For example, device 107 is shown as equipped with a camera. Each of the devices 101-107 may comprise the vehicle traffic management system described above.

A sensor may be used to identify and locate occupants or other objects in a passenger compartment of the vehicle comprising that sensor. Such sensors may include ultrasonic sensors, chemical sensors (e.g., carbon dioxide), cameras and other optical sensors, radar systems, heat and other infrared sensors, capacitance or electric field, magnetic or other field change sensors, etc. In operation, these sensors may provide to a traffic agent application various types of output, but typically use electrical or optical signals having information. For example, a vehicle 101 C may comprise a receiving antenna. An interrogator can transmit multiple signals from the antenna of the vehicle 101 C and at a later time, the antenna will receive the transmitted signals. The transmitted signals may for example be received from a surface acoustic wave (SAW) device that may be placed on the road. By comparing the arrival time of the received pulses, the position of the vehicle 101C on the monitoring area 100A may precisely be calculated.

Thus, there are different types of sensors that can be used or installed on the devices 101-107. Devices 101-107 may or may not have the same types of sensors. The devices 101-107 may communicate with each other via, for example, a wireless communication protocol such as v2v communication protocol in order to share their sensor data. For example the wireless communication protocol may comprise LTE-U using a License Assisted Access (LAA) that performs the authentication via the LTE NW but the data flow can then run mobile to mobile using LTE in unlicensed bands or WiFi. Such device to device communication may for example be lower than 10ms which may be smaller than the time 100 -300 ms needed by a human to react to a signal. Another example of wireless communication may be a car-2-car communication as a transport means from the sending car and let the receiving car connect the smart phone which is part of the receiving car.

The sharing of the sensor data may help determining the current traffic configuration in a given monitoring area.

In one example of Figure 1, monitoring area 100A is shown as containing three vehicles 101A-C, where for example vehicle 101 B is willing to overtake vehicle 101 C. However, vehicle 101 C which is in front of vehicle 101 B blocks the view for vehicle 101 B. The side or front camera of the vehicle 101A and/or vehicle 101 C may lend its sensor data to vehicle 101 B and give thus free sight to vehicle 101 B e.g. such that the driver of vehicle 101 B may be warned or notified that he or she can provides inputs in order to control vehicle 101 B to overtake vehicle 101 C. Vehicle 101B may or may not have cameras. Although vehicle 101 B has a camera, it may be malfunctioning for the reason that the vehicles 101 A and 101 B block the view.

In another example of Figure 1, monitoring area 100B is shown as containing three vehicles 102A-C. Vehicle 102B which is in front of vehicle 102A may provide some sensor (type) data to vehicle 102A with the content that the current road condition is slippery. However, vehicle 102A might not possess the necessary kind of sensor type to determine that the current road condition is slippery. In this case, the traffic agent application of vehicle 102A upon receiving data from vehicle 102B may recommend a secure speed limit via taking into account local vehicle sensor data (e.g. tire condition, braking conditions...), driving preferences and additional sensor data from the leading vehicle 102B.

In another example of Figure 1, monitoring area 100C a biker or pedestrian 111 equipped with a mobile device 105 can connect to a vehicle e.g. 104A in order to receive sensor data from vehicle 104A. A turning vehicle 104A (as derived from the navigation system or the steering wheel of vehicle 104A) may be signaled by the vehicle 104A to the pedestrian 111 before the pedestrian sees it. Sensor sharing may for example include that the mobile device 105 may display outputs of the navigation system of the vehicle 104A, such that the pedestrian 111 is informed about the turn even before the driver of vehicle 104A is turning.

In a further example, and inside a factory (not shown) with robots and vehicles moving around, pedestrians can be warned as well. One example are pedestrians wearing augmented or virtual reality (VR) goggles. They need warnings as they are distracted/detached from the traffic events. The traffic participants (e.g. pedestrians) have the option to get an augmented view via a smartphone application of the current traffic surroundings which may increase their safety even if they or their vehicle is equipped with almost no or few sensors only.

The term "sensor" as used herein refers to a measuring, detecting or sensing device mounted on a device or any of its components. A partial, non-exhaustive list of sensors that are or can be mounted on a device 101-107: Camera; chemical sensor; antenna, capacitance sensor or other electric field sensor, electromagnetic wave sensor; pressure sensor; weight sensor; magnetic field sensor; air flow meter; humidity sensor; throttle position sensor; steering wheel torque sensor; wheel speed sensor; tachometer; speedometer; other velocity sensors; other position or displacement sensors; yaw, pitch and roll angular sensors; clock; gyroscopes or other angular rate sensors including yaw, pitch and roll rate sensors; GPS receiver; DGPS receiver; GNSS receiver; GLONASS receiver; BeiDou receiver or a similar global positioning receiver; ice sensor slippery detection system; snow and fog detector and temperature sensor.

The term "configuration" refers to an arrangement of things and/or environment conditions including roads, moving objects, and their interactions in a given monitoring area. In the context of examples described herein, a configuration may be comprised of a set of devices such as vehicles, types of devices, types of sensors of the devices. For example, a traffic configuration could specify the position of the devices in the monitoring area, the weather conditions in the monitoring area, CO₂, Ozone and NOx emissions in the monitoring area. The traffic configuration may be based on information about the entire moving and not moving devices in the monitoring area or may be based on information about a predetermined portion of the moving or not moving devices.

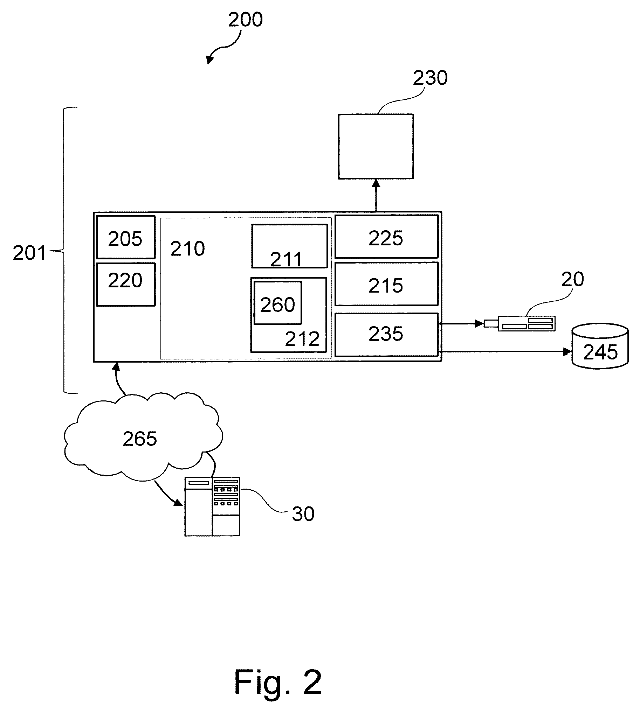

Figure 2 depicts an example hardware implementation of a processing system 200 which may be part of devices 101-107. The processing system may for example comprise the vehicle traffic management system described above. Figure 2 represents a general computerized system, suited for implementing method steps as involved in the disclosure.

It will be appreciated that the methods described herein are at least partly non-interactive, and automated by way of computerized systems, such as servers or embedded systems. In exemplary embodiments though, the methods described herein can be implemented in a (partly) interactive system. These methods can further be implemented in software 212, hardware (processor) 205, or a combination thereof. In exemplary embodiments, the methods described herein are implemented in software, as an executable program, and is executed by a special or general-purpose digital computer, such as a personal computer, workstation, minicomputer, or mainframe computer. The most general system therefore includes a general-purpose computer 201.

In exemplary embodiments, in terms of hardware architecture, as shown in Figure 2, the computer 201 includes a processor 205, memory (main memory) 210 coupled to a memory controller 215, and one or more input and/or output (I/O) devices (or peripherals) 20, 245 that are communicatively coupled via a local input/output controller 235. The input/output controller 235 can be, but is not limited to, one or more buses or other wired or wireless connections, as is known in the art. The input/output controller 235 may have additional elements, which are omitted for simplicity, such as controllers, buffers (caches), drivers, repeaters, and receivers, to enable communications. Further, the local interface may include address, control, and/or data connections to enable appropriate communications among the aforementioned components. As described herein the I/O devices 20, 245 may generally include any generalized cryptographic card or smart card known in the art.
The processor 205 is a hardware device for executing software, particularly that stored in memory 210. The processor 205 can be any custom made or commercially available processor, a central processing unit (CPU), an auxiliary processor among several processors associated with the computer 201, a semiconductor based microprocessor (in the form of a microchip or chip set), a macroprocessor, or generally any device for executing software instructions.

The memory 210 can include any one or combination of volatile memory elements (e.g., random access memory (RAM, such as DRAM, SRAM, SDRAM, etc.)) and nonvolatile memory elements (e.g., ROM, erasable programmable read only memory (EPROM), electronically erasable programmable read only memory (EEPROM), programmable read only memory (PROM). Note that the memory 210 can have a distributed architecture, where various components are situated remote from one another, but can be accessed by the processor 205.

The software in memory 210 may include one or more separate programs, each of which comprises an ordered listing of executable instructions for implementing logical functions, notably functions involved in embodiments of this invention. In the example of Figure 2, software in the memory 210 includes instructions 212 e.g. instructions to manage databases such as a database management system.
The software in memory 210 shall also typically include a suitable operating system (OS) 211. The OS 211 essentially controls the execution of other computer programs, such as possibly software 212 for implementing methods as described herein.

The methods described herein may be in the form of a source program 212, executable program 212 (object code), script, or any other entity comprising a set of instructions 212 to be performed. When a source program, then the program needs to be translated via a compiler, assembler, interpreter, or the like, which may or may not be included within the memory 210, so as to operate properly in connection with the OS 211. Furthermore, the methods can be written as an object oriented programming language, which has classes of data and methods, or a procedure programming language, which has routines, subroutines, and/or functions.

In exemplary embodiments, output devices can be coupled to the input/output controller 235. The output devices such as the I/O devices 245 may include input devices, for example but not limited to microphone and the like. The I/O devices 20, 245 may further include devices that communicate both inputs and outputs, for instance but not limited to, a network interface card (NIC) or modulator/demodulator (for accessing other files, devices, systems, or a network), a radio frequency (RF) or other transceiver, a telephonic interface, a bridge, a router, and the like. The I/O devices 20, 245 can be any generalized cryptographic card or smart card known in the art.

The system 200 can further include a display controller 225 coupled to a display 230. In exemplary embodiments, the system 200 can further include a network interface for coupling to a network 265. The network 265 can be an IP-based network for communication between the computer 201 and any external server, client and the like via a broadband connection. The network 265 transmits and receives data between the computer 201 and external systems 30, which can be involved to perform part or all of the steps of the methods discussed herein. In exemplary embodiments, network 265 can be a managed IP network administered by a service provider. The network 265 may be implemented in a wireless fashion, e.g., using wireless protocols and technologies, such as WiFi, WiMax, etc. The network 265 can also be a packet-switched network such as a local area network, wide area network, metropolitan area network, Internet network, or other similar type of network environment. The network 265 may be a fixed wireless network, a wireless local area network (LAN), a wireless wide area network (WAN) a personal area network (PAN), a virtual private network (VPN), intranet or other suitable network system and includes equipment for receiving and transmitting signals.

When the computer 201 is in operation, the processor 205 is configured to execute software 212 stored within the memory 210, to communicate data to and from the memory 210, and to generally control operations of the computer 201 pursuant to the software. The methods described herein and the OS 211, in whole or in part, but typically the latter, are read by the processor 205, possibly buffered within the processor 205, and then executed.

When the systems and methods described herein are implemented in software 212, as is shown in Figure 2, the methods can be stored on any computer readable medium, such as storage 220, for use by or in connection with any computer related system or method. The storage 220 may comprise a disk storage such as HDD storage. For example, software 212 may comprise the traffic agent application 260.

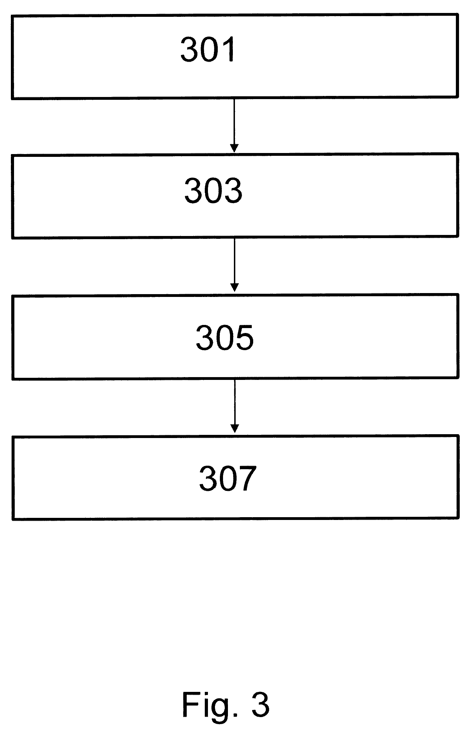

Figure 3 is a flowchart of a method for controlling a first device e.g. 101A. The first device 101A may be controlled in a monitoring area such as monitoring area 100A. In step 301, the first device collects a first set of data using a first type of sensors of the first device. For example, the first device 101A being a vehicle may comprise a camera on each side of the vehicle. The first device 101A may further comprise a main controller that may be configured to provide to the traffic agent application 260 a current list of available sensors. For example, the communication between the traffic agent application 260 and the main controller can be performed via Bluetooth or Wi-Fi or NFC.

The first set of data may, for example, comprise real-time data that is dynamically collected. The first set of data may comprise, in another example, data that is collected on a periodic basis e.g. every hour. The first set of data may comprise, in another example, data that is collected in response to detecting an event such as a collision in the traffic. In a further example, the first set of data may be collected on demand e.g. upon receiving a request to collect the first set of data.
In one example, the collecting of the first set of data may be user controlled. The traffic agent application 260 may collect data only from user defined set of sensors. The traffic agent application 260 may for example comprise a list of the user defined set of sensors or may receive a user input from the user e.g. the driver of vehicle 101A, indicating the set of sensors whose data can be collected and shared with other devices (with community and/or P2P).

The collecting of the first set of data may for example comprise prompting the user of the device 101A to provide personal parameter values such as critical alarms and on demand notifications.

The first set of data may be written in a given data structure comprising values of parameters that are evaluated using measurements or outputs of the first type of sensors. For example, for the first type of sensors a first set of parameters may be defined, wherein the output that is received or collected from the first type of sensors can be used to determine values of the first set of parameters. A parameter may for example comprise the position of the first device 101A, the movement speed of the first device 101A, the distance between the first device 101A and the device (e.g. device 101 B) which is in front of it, first device acceleration, moving direction such as the next point of the first device after a certain time interval.

In step 303, a second set of data of a second type of sensors of at least another device (a second device) may be received over a communication channel. The second device may be different from the first device. The first device 101A may for example have multiple modes of operations. The multiple modes of operation may comprise a default mode, sensing mode and receiving mode. In the sending mode, the first device 101A may be configured to send e.g. during a predefined time period, collected data of the sensors of the first device 101A (e.g. the first set of data) to other devices such as devices 101B-C, 107, 102 and/or 103. In the receiving mode, the first device 101A may be configured to receive sensor data from other devices such as devices 101B-C, 107, 102 and/or 103. Step 303 may be performed while the first device 101A is in the receiving mode. In the default mode, the first device 101 does not send or receive sensor data (e.g. it may receive other data such as network data from base stations etc. via other communication channels different from the communication channels of step 303).

The second set of data may indicate values of a second set of parameters that are associated with the second type of sensors. The second set of data may further indicate information on the second device such as the type of the second device e.g. car, bike, the size of the device etc. The second set of data may have the same format (e.g. in form of metadata) as the first set of data. For example, the first and second sets of data may be structured according to a predefined metadata scheme.

In one example, the first and second sets of data may be described using a set of vocabularies and ontologies used to represent road/traffic event and accident data involving event, vehicle etc.

In one example, step 303 may be performed in response to determining that the second type of sensor is unavailable for the first device 101A. In response to determining that the second type of sensor is unavailable for the first device 101A the first device 101A may be switched to the receiving mode for the receiving of the second set of data.

The second type of sensors may be unavailable for the first device 101A if for example the sensitivity of the second type sensor of the device 101A is below a predefined threshold in at least part of the monitoring area 100A.

In step 305, the first and second sets of data may be combined or may be used for determining a current vehicle traffic configuration in the monitoring area 100A. The first and second sets of data may for example be used to model the traffic configuration in the monitoring area 100A.

The combination of the first set of data and second set of data may comprise using the values of the first set of parameters and second set of parameters. The current traffic configuration may be determined based on the values of the first and second set of parameters. For example, using the positions of devices that are indicated in the first and second sets of data, a mapping that shows these positions may be created. That mapping may also indicate the direction and speed of movement of the devices in the mapping.

In one example, the current traffic configuration may be determined based on an ontological description of the current traffic of vehicles using the first and second sets of data. The ontological description comprises a plurality of vehicles and current connections or relationships of the plurality of vehicles. For example, the ontological description may describe an operational relationship that indicates a relationship between at least two devices in terms of the ontological description.

The ontology may enable the sharing of information between the devices 101-107. For that, the ontology may define a common basis on where and how to interpret data. For example, each device of the devices 101-107 may provide sensor data in accordance with the ontology.

The ontology may be advantageous as it may serve as semantic glue between heterogeneous or incompatible information sources or sensors. Consider for example a French-American speed sensor. The American sensor may provide values of a parameter named "speed", whereas the French sensor may use parameter name "vitesse". By aligning their ontologies, the two sensors may be integrated by providing a unique bilingual entry point to the information provided by the devices that comprise the sensors.

For example, each type of sensors of the devices 101-107 may be assigned a corresponding class in the ontology. Those sensors of the ontology may be described by assigning parameters (e.g. the first and second sets of parameters) to them. Those parameters may be the parameters of the sensors. In other words, the sensor data of each of the devices 101-107 may comprise values of sensor parameters that can form features, characteristic of their sensors.
The first and second sets of data may be encoded or written for example in a Resource Description Framework (RDF) or XML format e.g. using a corresponding ontology language that can be interpreted by a receiving device of the first and second sets of data.

The first and second sets of data may be combined or may be used for instantiating the classes that correspond to the sensors that have provided the first and second sets of data. These instances and their relationships may be used to determine the current traffic configuration.

In step 307, at least the first device 101A may be controlled in accordance with the current vehicle traffic configuration. The controlling of the first device 101A may be performed using directions wherein the directions include a speed, a lane, and a position within the vehicle traffic to which the first device 101A adheres.

For example, the first device 101A may be enabled to be automatically controlled in accordance with the current vehicle traffic configuration. Additionally or alternatively, a user of the device 101A may be enabled for controlling the first device 101A in accordance with the current vehicle traffic configuration e.g. the user may be prompted for providing inputs or performing actions in order to control the first device 101A.

Using the example of Figure 1, the device 101 B having access to the traffic configuration showing that there is no device approaching device 101C and no device is approaching the device 101A from the rear side, then the device 101B may be controlled to overtake the device 101 C. The control of the device 101 B may automatically performed or may be performed by notifying the user of the device 101 B of the actions to be performed e.g. by an automatic graphically animated assistance.

In case, the first device 101A is a traffic light, the controlling of the first device 101A may comprise switching the traffic light into a lighting mode that meets to the current vehicle traffic configuration.

Step 307 may further comprise displaying the current traffic configuration on the display 230 of the first device 101A or of another device that has been notified by the first device 101A. In one example, the user of the first device 101A may be prompted to confirm or reject the determined current traffic configuration. If the current traffic configuration is rejected steps 301-307 may be repeated.

There is a minimum set of sensors available in almost any vehicle in addition to the sensors of the personal smart phone. The minimum sensor set enables a basic traffic scene or traffic configuration modeling. The current traffic model may be optionally denied by the end user in case of anomalies (e.g. if the user aware traffic scene does not match the current modeled traffic scene). The present method may enable users to have 360 degree awareness of dangers and conditions, even if they cannot be directly perceived.

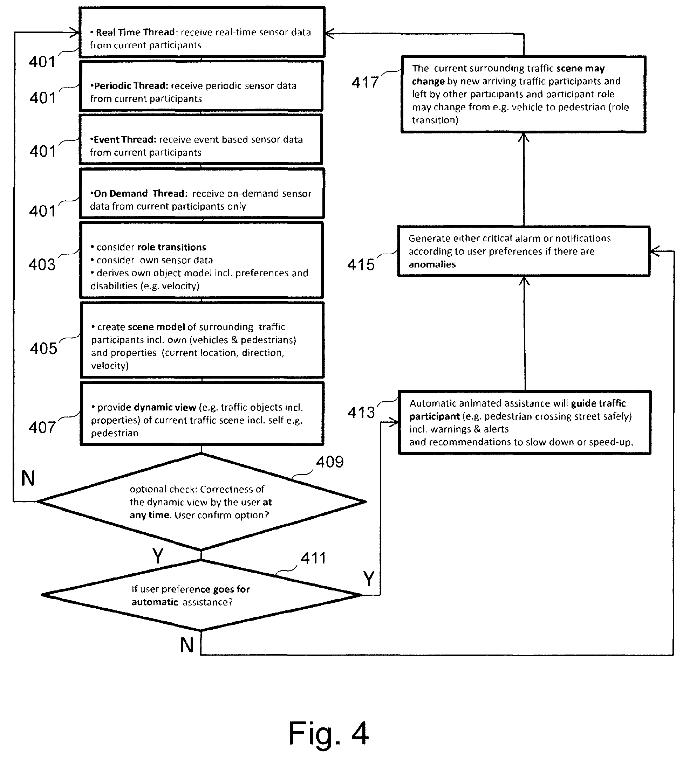

Figure 4 is a flowchart of a method for controlling a receiving device e.g. 101A in a given traffic area e.g. 100B.

In step 401, the receiving device 101A may receive sensor data from one or more sending devices 101-107 that are currently participating in the traffic of the traffic area. The receiving of the sensor data may be performed in multiple ways.

In one example, the received sensor data may be real time sensor data that is received (e.g. dynamically) as soon as collected by the sending devices. In another example, the received sensor data may be periodic sensor data that is received on a periodic basis. In another example, the received sensor data may be event based sensor data that may be received upon detecting an event by the sending devices. In a further example, the received sensor data may be an on-demand sensor data that is received in response to sensing a demand or a request (e.g. by the receiving device 101A) to the sending devices.

The receiving of the sensor data may be performed by executing a corresponding thread on the receiving device 101A. For example, depending on the receiving method, a corresponding thread may be executed. A real time thread may be executed for the receiving of real time sensor data. A periodic thread may be executed for the receiving of the periodic sensor data. An event thread may be executed for the receiving of the event based sensor data. An on demand thread may be executed for the receiving of the on-demand sensor data.

In step 403, the receiving device 101A may determine its own data that may be used in combination with the received sensor data. The determined data may for example comprise sensor data that is collected by the receiving device 101A using its own sensors and that may be different from the received sensor data. The determining of the data may further comprise deriving an object model taking into account the received sensor data (e.g. based on the classes that are associated with different types of sensors that provided data to the receiving device) of the receiving device 101A that may include preferences and/or disabilities (e.g. velocity).

In step 405, the receiving device 101A may create a scene model (or a current vehicle traffic configuration) of surrounding traffic participants including vehicles or pedestrians 111 (that carry mobile devices such as smart phones) in the traffic area (e.g. that surrounds the receiving device 101A) and properties such as current location, direction and velocity of the traffic participants. The creation of the scene model may be performed using the received sensor data of step 401 in combination with the determined data of step 403.

In step 407, the receiving device 101A may provide a dynamic view the current traffic scene using the created scene model. In one example, this step 407 may further comprise prompting a user of the receiving device (e.g. a driver) to provide feedbacks on the current traffic scene.

In case, the user (inquiry 409) indicates or provides input indicating that the dynamic view is not correct steps 401-409 may be repeated; otherwise it may be checked by the receiving device 101A (inquiry 411) if an automatic assistance is required by the user or not.

In case an automatic assistance is required by the user of the receiving device 101A, an animated assistance including warnings, alerts and recommendations may automatically be displayed e.g. together with the dynamic view of the traffic scene in step 413.

In step 415, the receiving device 101A may generate either critical alarm or notifications according to user preferences if there are anomalies. For example, the receiving device may receive inputs or requests from the user of receiving device 101A to generate notifications or alarms.

In response to determining, in step 417, that the current surrounding traffic scene (e.g. of the receiving device 101A) may change by new arriving traffic participants and by leaving of other participants and the participant role may change from e.g. a vehicle driver may become pedestrian 111 having a smartphone 105 (role transition), steps 401-417 may be repeated.

In case an automatic assistance is not required by the user of the receiving device 101A, steps 415-417 may be performed.

In one example, the sensor data sharing process between devices 101-107 may comprise the following tasks:
1. The conveyed sensor data may be used to instantiate a local available abstract sensor type providing an actual instance of a sensor object which reflects the actual remote sensor object and enables the imitation as if the local vehicle is equipped with the inherited sensor type.
2. Applying of appropriate traffic ontology to support the communication and classification of sensors, vehicles and traffic participants. The ontology may be integrated or part of the traffic agent application 260 to provide distributed reasoning capabilities maintaining the coherence of the whole set of suggestions to involved traffic participants.
3. Providing V2V communication especially between adjacent vehicles for sensors sharing real-time data supporting real-time traffic guidance.
4. Enabling the vehicle owners to publish their private vehicle sensor data for public to participate in the community sharing sensor data, services and applications. The enablement for sharing community data may be used to perform complementary centralized data analytics and data mining as well as direct V2V communication to current traffic surrounding (traffic scene).

### List of reference numerals

- 100A-C: monitoring area
- 101A-C: vehicle
- 102A-C: vehicle
- 103A-C: vehicle
- 104A-B: vehicle
- 105: mobile device
- 107A-D: traffic light
- 111: pedestrian
- 120: intersection zone
- 200: processing system
- 201: computer
- 205: processor
- 210: memory
- 211: OS
- 212: software
- 220: storage
- 215: memory controller
- 225: display controller
- 230: display
- 235: input/output controller
- 245, 20: I/O devices
- 260: traffic agent application
- 265: network
- 30: external system
- 301-307: steps

## Claims

1. A method for controlling a first device (101A), the method comprising:
collecting a first set of data using a first type of sensors of the first device (101A);
receiving over a communication channel a second set of data of a second type of sensors of at least another second device (101B-107);
combining the first and second sets of data for determining a current vehicle traffic configuration;
enabling controlling at least the first device (101A) in accordance with the current vehicle traffic configuration.

2. The method of claim 1, the first device being a vehicle, wherein enabling controlling the first device comprising using the current traffic configuration for controlling the first device using directions wherein the directions include a speed, a lane, and a position within the vehicle traffic to which the first device adheres.

3. The method of claim 1, the first device being a traffic light, wherein enabling comprising controlling the first device for switching the traffic light into a lighting mode that meets the current vehicle traffic configuration.

4. The method of any of the previous claims, further comprising: in response to determining that the second type of sensors is unavailable for the first device, switching the first device to a receiving mode for the receiving of the second set of data.

5. The method of claim 4, the determining that the second type of sensors is unavailable for the first device comprising determining that the sensitivity of the second type of sensors of the first device is below a predefined threshold in at least part of a monitoring area, wherein the current vehicle traffic configuration is determined for the monitoring area.

6. The method of any of the previous claims, the determining of the current vehicle traffic configuration comprising selecting among predefined alternative vehicle traffic configurations the current vehicle traffic configuration using the first and second sets of data.

7. The method of any of the previous claims, the enabling of controlling of the first device being performed in response to a successful negotiation of the current vehicle traffic configuration between the first device and a neighboring device of the first device.

8. The method of any of the previous claims, further comprising broadcasting by the first device a recognition signal for discovering a third device, and in response receiving a response from the third device, the response indicating that the third device has none of the first or second type of sensors.

9. The method of any of the previous claims, further comprising notifying a third device having no first or second type of the sensors regarding the current vehicle traffic configuration.

10. The method of any of the previous claims, the communication channel being a vehicle-to-vehicle channel between the two devices being vehicles.

11. The method of any of the previous claims, the enabling controlling of the first device comprising: displaying the current vehicle traffic configuration in association with controlling options for controlling the first device.

12. The method of any of the previous claims, the first and second sets of data are real-time data.

13. A vehicle traffic management system being configured for:
collecting a first set of data using a first type of sensors of a first device;
receiving a second set of data of a second type of sensors of at least another second device over a communication channel;
combining the first and second sets of data for determining a current vehicle traffic configuration; enabling controlling at least the first device in accordance with the current vehicle traffic configuration.

14. A system being configured for sending set of data of a type of sensors over a communication channel to a second system.

15. A non-transitory computer readable storage medium comprising instructions that, when executed by a processing device, cause the processing device to effect the method of any one of the preceding method claims.

## Amended claims

### Amended claims in accordance with Rule 137(2) EPC.

1. A method for controlling a first device (101A), the method comprising:
collecting a first set of data using a first type of sensors of the first device (101A);
receiving over a communication channel a second set of data of a second type of sensors of at least another second device (101B-107);
combining the first and second sets of data for determining a current vehicle traffic configuration;
enabling controlling at least the first device (101A) in accordance with the current vehicle traffic configuration, the enabling of controlling of the first device being performed in response to a successful negotiation of the current vehicle traffic configuration between the first device and a neighboring device of the first device.

2. The method of claim 1, the first device being a vehicle, wherein enabling controlling the first device comprising using the current traffic configuration for controlling the first device using directions wherein the directions include a speed, a lane, and a position within the vehicle traffic to which the first device adheres.

3. The method of claim 1, the first device being a traffic light, wherein enabling comprising controlling the first device for switching the traffic light into a lighting mode that meets the current vehicle traffic configuration.

4. The method of any of the previous claims, further comprising: in response to determining that the second type of sensors is unavailable for the first device, switching the first device to a receiving mode for the receiving of the second set of data.

5. The method of claim 4, the determining that the second type of sensors is unavailable for the first device comprising determining that the sensitivity of the second type of sensors of the first device is below a predefined threshold in at least part of a monitoring area, wherein the current vehicle traffic configuration is determined for the monitoring area.

6. The method of any of the previous claims, the determining of the current vehicle traffic configuration comprising selecting among predefined alternative vehicle traffic configurations the current vehicle traffic configuration using the first and second sets of data.

7. The method of any of the previous claims, further comprising broadcasting by the first device a recognition signal for discovering a third device, and in response receiving a response from the third device, the response indicating that the third device has none of the first or second type of sensors.

8. The method of any of the previous claims, further comprising notifying a third device having no first or second type of the sensors regarding the current vehicle traffic configuration.

9. The method of any of the previous claims, the communication channel being a vehicle-to-vehicle channel between the two devices being vehicles.

10. The method of any of the previous claims, the enabling controlling of the first device comprising: displaying the current vehicle traffic configuration in association with controlling options for controlling the first device.

11. The method of any of the previous claims, the first and second sets of data are real-time data that is dynamically collected.

12. A vehicle traffic management system being configured for:
collecting a first set of data using a first type of sensors of a first device;
receiving a second set of data of a second type of sensors of at least another second device over a communication channel;
combining the first and second sets of data for determining a current vehicle traffic configuration; enabling controlling at least the first device in accordance with the current vehicle traffic configuration, , the enabling of controlling of the first device being performed in response to a successful negotiation of the current vehicle traffic configuration between the first device and a neighboring device of the first device.

13. A non-transitory computer readable storage medium comprising instructions that, when executed by a processing device, cause the processing device to effect the method of any one of the preceding method claims.
